# EUROPEAN PATENT APPLICATION

(11) **EP 2 894 732 A1**
(43) Date of publication of application: **15.07.2015**
(21) Application number: 13832382.9
(22) Date of filing: 30.08.2013
(51) Int. Cl.: H01R 43/28, H01B 7/00, H01B 13/012, H01R 4/00, H01R 4/72, H01R 24/38, H02G 3/04

(54) **CORE WIRE INSULATING STRUCTURE AND INSULATING METHOD**

(30) Priority: 03.09.2012 JP 2012192882
(71) Applicant: Yazaki Corporation, Minato-ku Tokyo 108-8333 (JP)
(72) Inventor: INAO Shinichi, Makinohara-shi Shizuoka 421-0492 (JP); ADACHI Hideomi, Makinohara-shi Shizuoka 421-0492 (JP); OGUE Takeshi, Makinohara-shi Shizuoka 421-0492 (JP); OGA Tatsuya, Makinohara-shi Shizuoka 421-0492 (JP); SUGURO Masaaki, Makinohara-shi Shizuoka 421-0492 (JP); OZAKI Yoshiaki, Makinohara-shi Shizuoka 421-0492 (JP); YOSHIDA Hiroyuki, Makinohara-shi Shizuoka 421-0492 (JP)
(74) Representative: Grünecker Patent- und Rechtsanwälte PartG mbB
(86) International application number: PCT/JP2013/073440
(87) International publication number: WO 2014/034900

(57) **Abstract**

An insulating member (6) is integrally adhered to an outer conductor (3), an outer insulating covering (4) of a center conductor (2), and an outer insulating covering (5) of the outer conductor (3), wherein the outer conductor (3) passes through a branch tube portion (7) of the insulating member (6).

## Description

### Technical field

The present invention relates to an insulating method and an insulating structure of a concentric core wire which is insulated by an insulative member while an outer conductor is peeled off relative to a central conductor of the concentric core wire.

### Background art

Traditionally, various kinds of harness structures are proposed to connect, for example, a high voltage battery to a motor of a vehicle or the like.

In a patent document 1, as shown in Fig. 7, a structure is disclosed in which a wire harness 55 is wired from an inverter 53, which is adjacent to a motor 52, at the front of a hybrid vehicle 51 to a high voltage battery 54 at the rear of the vehicle. In the structure, the wire harness 55 includes a flat corrugated tube 56 (that is, electric wire protecting tube) made of synthetic resin and a plurality of electric wires 57 (for example, two high voltage electric wires and two low voltage electric wires) which are inserted into the flat corrugated tube 56 in parallel with each other.

One part 55a of the wire harness 55 is exposed and wired under a floor 58 of the hybrid vehicle 51 with the corrugated tube 56. The one part 55a is connected to a wire harness part 55b inside the vehicle through a protector 59 or a grommet 60 so that the high voltage electric wire is electrically connected to the inverter 53 or the high voltage battery 54. The corrugated tube 56 which is wired under the floor 58 of the hybrid vehicle 51 has high rigidity (in other words, strength) in order to protect the high voltage battery 54. The corrugated tube 56 which is wired under the floor 58 of the hybrid vehicle 51 has high rigidity (in other words, strength) in order to protect the internal electric wires 57 from flying stones or the like. The low voltage electric wires electrically connect a low voltage battery 61 adjacent to the high voltage battery 54 to an electrical junction box 62 at the front of the vehicle.

At two ends at the front and rear of the wire harness 55, the two high voltage electric wires and the two low voltage electric wires are led out parallelly from the flat corrugated tube 56, and are electrically connected to terminals (not shown). Each terminal is accommodated in a connector housing (not shown) and forms a connector.

In addition, in a patent document 2, a structure is disclosed in which in order to electrically connect an inverter of an electric vehicle to a motor at a wheel side, three high voltage electric wires are inserted into a metal pipe (that is, electric wire protecting tube) which is a main shielding part. In the structure, end parts of the high voltage electric wires are led out from the metal pipe, terminals are crimped and connected to distal ends of the end parts, and the end parts are covered by a cylindrical web member and a shielding shell to form a shielded part. Then, the terminals are bolt-fastened and electrically connected to device side terminals of the inverter or the like.

In the above patent documents, two or three high voltage electric wires and two low voltage electric wire are nearly parallelly wired into the electric wire protecting tube. In contrast, in a patent document 3, it is disclosed that an electric wire drawing outlet is provided in the middle of a metal main pipe, a metal branch pipe is attached to the electric wire drawing outlet and is fixed with a metal branch pipe holding part which has a L-like cross section, three electric wires for large electric power are inserted through the main pipe to electrically connect an inverter device at the front side of the vehicle and a driving motor for rear wheels, and three electric wires for small electric power which are inserted through the main pipe are led into the branch pipe to be electrically connected to a driving motor of an air conditioner.

With regard to the branching of the electric wires, it is disclosed in a patent document 4 that a nearly Y-shaped protector is insert-molded at a branched part of a wire harness (that is, a plurality of insulative coated electric wires) for an automotive, or a tape is wound around a branched part of a wire harness (that is, a plurality of insulative coated electric wires).

### Citation List

### Patent Literature

Patent document 1: JP-A-2010-47031 (Figs. 1 to 3)
Patent document 2: JP-A-2004-171952 (Figs. 1 to 3)
Patent document 3: Japan Patent No. 4823559 (Figs. 2 to 3)
Patent document 4: JP-A-2005-294132 (Figs. 4 and 5)

### Summary of the invention

### Technical Problem

However, for the harness structure described in the above traditional patent document 1, it may be concerned that a wide harness wiring space in the hybrid vehicle 51 or the like becomes necessary in order to parallelly arrange the plurality of electric wires 57 in the flat corrugated tube 56. In addition, for the harness structures described in the patent documents 1 and 2, the positions of the ends of the plurality of electric wires 57 easily become scattered (that is, easy to swing), and it may be concerned that the ends of the electric wires 57 are hard to be positioned, for example, when terminals are electrically connected to the ends of the electric wires 57.

In order to decrease the wide harness wiring space because of the flat corrugated tube 56, it is considered to use, for example, a concentric core wire (that is, coaxial wire), and electrically connect a central conductor and an outer conductor of the concentric core wire to separate terminals. In this case, because it is necessary to peel off the outer conductor (peel off the insulative sheath) to be longer than the central conductor, more man-hours are necessary in winding insulative tape to insulate the outer conductor.

The present invention is made in view of the above situations, and the object of the present invention is to provide an insulating structure and an insulating method of a concentric core wire so that by using the concentric core wire, for the purpose of electrically connecting a central conductor and an outer conductor of the concentric core wire to, for example, separate terminals or the like, the outer conductor of the concentric core wire can be surely insulative, moreover, the outer conductor of the concentric core wire can be easily insulated at a low cost, and furthermore, the central conductor and the end conductor of the concentric core wire can be easily positioned.

### Solution to Problem

In order to solve the problem, the concentric core wire insulating structure and the insulating method has following features (1) to (4).
(1) A concentric core wire insulating structure includes a concentric core wire, and an insulative member that covers the concentric core wire. The concentric core wire has a central conductor which is exposed at one end of the concentric core wire, and a bundled outer conductor which is exposed at the end, the insulative member integrally covers the outer conductor, an outside insulative sheath of the central conductor, and an outside insulative sheath of the outer conductor, and the outer conductor passes through a branch pipe part of the insulative member.
   In the above structure, the outer conductor of the concentric core wire which is bundled into one bundle is covered and insulated by a pipe-shaped insulative member. Because the insulative member not only covers the outer conductor, but also integrally covers the outside insulative sheath of the central conductor and the outside insulative sheath of the outer conductor, the insulating property is good, and the outer conductor is positioned without a wobble relative to the central conductor. For the structure of the concentric core wire, the outer conductor is peeled off and bundled into one (or a plurality of) bundle while the central conductor is annularly surrounded by the outside insulative sheath. The outer conductor except the distal end side (that is, a part connected to a terminal or the like) is covered by the insulative member. The central conductor except the distal end side (that is, a part connected to a terminal or the like) is also covered by the outside insulative sheath. The outer conductor is arranged in parallel with the central conductor, but it is preferable to improve the operativity of connecting terminals or like. The insulative member is formed by a resin molded or resin shrinkable tube. The insulative member also serves as a waterproofing (in other words, watertight) member.
(2) In the concentric core wire insulating structure according to (1), the concentric core wire has a first outer conductor and a second outer conductor which are bundled separately as the outer conductor, the insulative member integrally covers the first outer conductor and the second outer conductor, and the first outer conductor passes through a first branch pipe part of the insulative member, and the second outer conductor passes through a second branch pipe part of the insulative member.
   In the above structure, two (the first and the second) outer conductors are integrally and simultaneously covered and insulated by the insulative member while being led out to form a trifurcated shape together with the central conductor. The first outer conductor is covered by the first branch pipe part of the insulative member, and the second outer conductor is covered by the second branch pipe part of the insulative member. The main pipe part of the insulative member integrally covers the outside insulative sheath of the central conductor, the outside insulative sheath of the first outer conductor, and the outside insulative sheath of the second outer conductor. Because the first and the second branch pipe parts are connected to the main pipe part of the insulative member respectively, the outer conductors held by the branch pipe parts are positioned without a wobble relative to the central conductor.
(3) In the concentric core wire insulating structure according to (1) or (2), the insulative member is a shrinkable tube made of synthetic resin which has a main pipe part into which the central conductor is inserted, and the branch pipe part into which the outer conductor is inserted.
   In the above structure, the outside insulative sheath of the central conductor, the base part of the outer conductor, and the outside insulative sheath of the outer conductor are accommodated inside the main pipe part of the shrinkable tube, and the outer conductor is accommodated inside the branch pipe part which is branched from the main pipe part. It is preferable that the shrinkable tube is a heat shrinkable tube which is shrunk to have a smaller diameter by hot wind. After the end of the concentric core wire (that is, the central conductor, the outer conductor, and the outside insulative sheaths of the central and outer conductors) is set to be inserted inside the heat shrinkable tube which has a larger diameter in an initial form, the heat shrinkable tube is heated to be shrunk to be closely adhered to the end of the concentric core wire (that is, the central conductor, the outer conductor, and the outside insulative sheaths of the central and outer conductors) without a gap.
(4) A concentric core wire insulating method, wherein after a central conductor and an outer conductor at one end of a concentric core wire are exposed, the exposed outer conductor is bundled, and then the outer conductor, an outside insulative sheath of the central conductor, and an outside insulative sheath of the outer conductor are integrally covered by an insulative member in such a way that the outer conductor passes through a branch pipe part of the insulative member.

In the above configuration, the outer conductor of the concentric core wire which is bundled into one bundle is covered and insulated by a pipe-shaped insulative member. Because the insulative member not only covers the outer conductor, but also integrally covers the outside insulative sheath of the central conductor and the outside insulative sheath of the outer conductor, the insulating property is good, and the outer conductor is positioned without a wobble relative to the central conductor. The outer conductor of the concentric core wire is peeled off and bundled into one (or a plurality of) bundle while the central conductor is annularly surrounded by the outside insulative sheath. The outer conductor except the distal end side (that is, a part connected to a terminal or the like) is covered by the insulative member. The central conductor except the distal end side (that is, a part connected to a terminal or the like) is also covered by the outside insulative sheath. The outer conductor is arranged in parallel with the central conductor, but it is preferable to improve the operativity of connecting terminals or like. The insulative member is formed by a resin molded or resin shrinkable tube. The insulative member also serves as a waterproofing (in other words, watertight) member.

According to the concentric core wire insulating structure of the above (1), because the outer conductor of the concentric core wire is covered and insulated integrally with the outside insulative sheath of the central conductor and the outside insulative sheath of the outer conductor by the insulative member, the insulating property of the outer conductor can be improved. In addition, because the insulative member integrally covers the end part of the concentric core wire, the outer conductor of the concentric core wire can be easily insulated at a low cost. Because the outer conductor is positioned by being held (in other words, fixed) relative to the central conductor by the insulative member, the operation of connecting terminals or the like to the central conductor and the outer conductor can be easily and efficiently performed.

According to the concentric core wire insulating structure of the above (2), because the first and second outer conductors of the concentric core wire are covered and insulated integrally with the outside insulative sheath of the central conductor, the outside insulative sheath of the first outer conductor, and the outside insulative sheath of the second outer conductor by the insulative member, the insulating property of the first and second outer conductors can be improved. In addition, because the insulative member integrally covers the end part of the concentric core wire, the first and second outer conductors of the concentric core wire can be easily insulated at a low cost. Because the first and second outer conductors are positioned by being held (in other words, fixed) relative to the central conductor by the insulative member, the operation of connecting terminals or the like to the central conductor and the first and second outer conductors can be easily and efficiently performed.

According to the concentric core wire insulating structure of the above (3), the end of the concentric core wire can be easily insulated at a low cost by a small device by using a shrinkable tube made of synthetic resin.

According to the concentric core wire insulating method of the above (4), because the outer conductor of the concentric core wire is covered and insulated integrally with the outside insulative sheath of the central conductor and the outside insulative sheath of the outer conductor by the insulative member, the insulating property of the outer conductor can be improved. In addition, because the insulative member integrally covers the end part of the concentric core wire, the outer conductor of the concentric core wire can be easily insulated at a low cost. Because the outer conductor is positioned by being held (in other words, fixed) relative to the central conductor by the insulative member, the operation of connecting terminals or the like to the central conductor and the outer conductor can be easily and efficiently performed.

### Brief description of the Drawings

Figs. 1A and 1B are figures which show an insulating structure and an insulating method of a concentric core wire of an embodiment, in which, Fig. 1A is a front view which shows that conductors at an end of the concentric core wire are peeled off, and Fig. 1B is a front view which shows that the end of the concentric core wire is covered by an insulative member.
Fig. 2 is a front view which shows a shrinkable tube as an embodiment of the insulative member corresponding to the concentric core wire of Fig. 1.
Figs. 3A and 3B are figures which show a concentric core wire corresponding to the concentric core wire of Fig. 1, which is in an initial form before an outer conductor is bundled, in which Fig. 3A is a perspective view and Fig. 3B is an A-A sectional view of Fig. 3A.
Figs. 4A and 4B are figures which show an insulating structure and an insulating method of a concentric core wire of another embodiment, in which, Fig. 4A is a front view which shows that conductors at an end of the concentric core wire are peeled off, and Fig. 4B is a front view which shows that the end of the concentric core wire is covered by an insulative member.
Fig. 5 is a front view which shows a shrinkable tube as an embodiment of the insulative member corresponding to the concentric core wire of Fig. 4.
Figs. 6A and 6B are figures which show a concentric core wire corresponding to the concentric core wire of Fig. 4, which is in an initial form before outer conductors are bundled, in which Fig. 6A is a perspective view and Fig. 6B is a B-B sectional view of Fig. 6A.

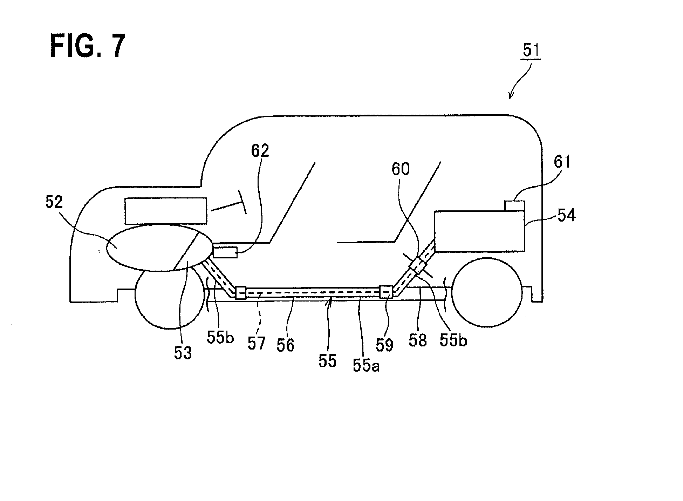

Fig. 7 is an illustrative figure which shows an example in which a traditional wire harness is wired.

### Description of Embodiments

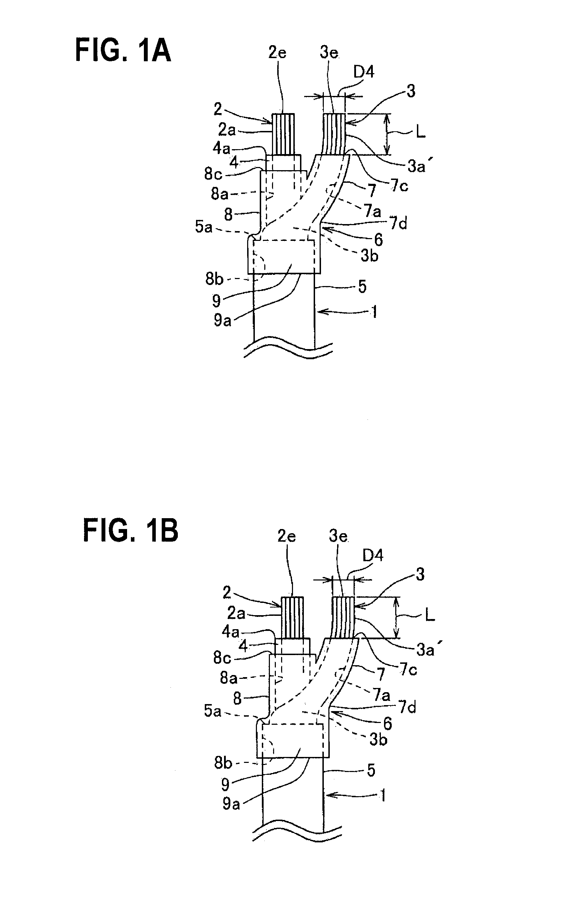

Figs. 1A to 3B show an insulating structure and an insulating method of a concentric core wire according to an embodiment of the present invention.

As shown in Fig. 1A, from a straight central conductor 2 of a concentric core wire (in other words, coaxial wire) 1, an outer conductor 3 is branched to the radially outside of the central conductor to form a bifurcated shape. The outer conductor 3 is curved at a base side 3b and is arranged parallel to the central conductor 2 at a distal end side 3c. The central conductor 2 is covered by a first layer outside insulative sheath 4 except an exposed distal end 2a. The outer conductor 3 has an exposed distal end 3a which is longer than the exposed distal end 2a of the central conductor 2, and is covered by a second layer outside insulative sheath 5 except the exposed distal end 3a. The central conductor 2 and the outer conductor 3 have a plurality of strands 2d, 3d formed of aluminum (or aluminum alloy) or copper (or copper alloy). The outside insulative sheaths 4, 5 are formed of synthetic resin.

As shown in Fig. 1B, after the state shown in Fig. 1A, the exposed distal end 3a of the outer conductor 3 of the concentric core wire 1, the first layer outside insulative sheath 4 of the central conductor 2, and the second layer outside insulative sheath 5 of the outer conductor 3 are integrally covered by an tubular insulative member 6. Thereby, the exposed distal end 3a shown in Fig. 1A of the outer conductor 3 is insulated from the outside and the central conductor 2. In this case, a length L of the exposed distal end 3a' of the outer conductor 3 that protrudes from the insulative member 6 is specified to be equal to (that is, identical or nearly identical to) the length of the exposed distal end 2a of the central conductor 2.

As shown in Fig. 1B, terminals (not shown) are crimped and electrically connected to the exposed distal ends 2a, 3a' of the central conductor 2 and the outer conductor 2 which pass through the insulative member 6. In addition, it is also possible that the exposed distal ends 2a, 3a are electrically connected to mating connecting parts by being welded instead of by being connected to terminals. In addition, if the central conductor 2 and the outer conductor 3 are thin wires for low voltage, the central conductor 2 and the outer conductor 3 may be connected to terminals by being pressure-connected instead of by being crimp-connected.

As shown in Fig. 1B, the outer conductor 3 is separated radially from a main pipe part 8 of the insulative member 6 for the central conductor 2 by a branch pipe part 7 of the insulative member 6. The exposed distal end 3a' of the outer conductor 3 passes through the branch pipe part 7, and therefore, the exposed distal ends 2a and 3a' of the central conductor 2 and the outer conductor 3 are positioned in parallel with each other. That is, the outer conductor 3 is fixed and positioned almost immovably relative to the central conductor 2 by the insulative member 6. Therefore, an operation of crimp-connecting or pressure-connecting, for example, terminals (not shown) to the exposed distal ends 2a, 3a' of the conductors (the central conductor 2, the outer conductor 3) can be accurately and easily performed.

In the example shown in Fig. 1B, if the exposed distal ends 2a, 3a' of the central conductor 2 and the outer conductor 3 protrude upward, an inner surface 8a of the main pipe part 8 of the insulative member 6 at the upper half side is closely adhered to the outer surface of the outside insulative sheath 4 of the central conductor 2 and the outer surface of the base side 3b of the outer conductor 3. An inner surface 7a of the branch pipe part 7 of the insulative member 6 is closely adhered to the outer surface of the protruding part of the outer conductor 3 except the base side 3b. An inner surface 8b of the main pipe part 8 at the lower part side is closely adhered to the circumference of the second layer outside insulative sheath 5 of the outer conductor 3.

A distal end surface 3e of the outer conductor 3 is positioned at the same height as a distal end surface 2e of the central conductor 2. A distal end 7c of the branch pipe part 7 of the insulative member 6 is positioned at the same height as a distal end 4a of the outside insulative sheath 4 of the central conductor 2. A distal end 8c of the main pipe part 8 of the insulative member 6 is positioned lower than the distal end 4a of the outside insulative sheath 4 of the central conductor 2 and the distal end 7c of the branch pipe part 7. A base end 7d of the branch pipe part 7 intersects one side surface (that is, right side surface) of the main pipe part 8, and the branch pipe part 7 protrudes obliquely upward from the one side surface (that is, right side surface) of the main pipe part 8 to have a curved shape. The diameter of a base end side (that is, a part of the main pipe part) 9 of the insulative member 6 is formed to be larger than that of the main pipe part 8. A lower end 9a of the insulative member 6 is positioned lower than an upper end 5a of the second layer outside insulative sheath 5.

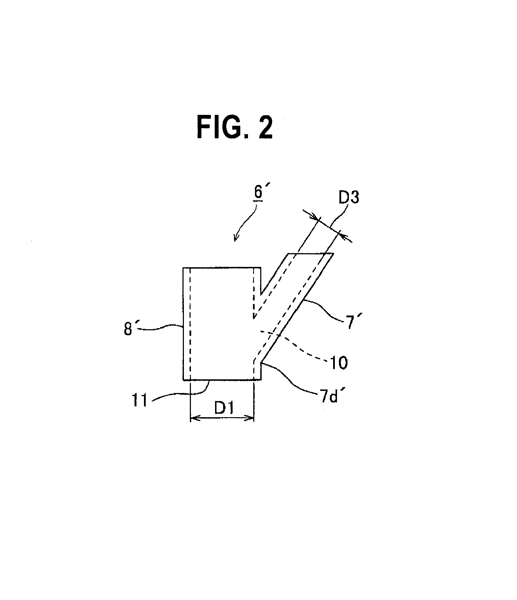

As shown in Fig. 2, it is preferable to use a heat shrinkable tube 6' made of synthetic resin as the insulative member 6. The heat shrinkable tube 6', for example, is formed as follows. A main pipe 8' and a branch pipe part 7' are separately formed of synthetic resin pipe material, a side surface of the main pipe part 8' is provided with an approximately circular hole part 10, and a base end 7d' of the branch pipe part 7' is adhered onto the fringe of the hole part 10. Alternatively, the main pipe part 8' and the branch pipe part 7' are integrally molded by a resin molding metal mold to obtain the heat shrinkable tube 6'. In the example shown in Fig. 2, the branch pipe part 7' protrudes obliquely upward and straightly from the main pipe part 8', but the branch pipe part 7' may be formed into a curved shape along the curved shape of the outer conductor 3 of Fig. 1A.

When the heat shrinkable tube 6' shown in Fig. 2 is in an initial state (that is, before being heated), an inner diameter D1 of the main pipe part 8' is larger than an outer diameter D2 of the second layer outside insulative sheath 5 of the concentric core wire 1 shown in Fig. 1A, and an inner diameter D3 of the branch pipe part 7' is larger than an outer diameter D4 of the outer conductor 3 of the concentric core wire 1 shown in Fig. 1B. When the central conductor 2 and the outer conductor 3 of the concentric core wire 1 are used as high voltage electric wires, it is preferable that the thickness of the heat shrinkable tube 6' is, for example, around 1mm or larger than 1mm.

After the heat shrinkable tube 6' is mounted to the concentric core wire 1 shown in Fig. 1A, when hot wind from a heater (not shown) is applied to the outer surface of the heat shrinkable tube 6', the heat shrinkable tube 6' shrinks as the insulative member 6 shown in Fig. 1B. Thereby, the heat shrinkable tube 6' closely adheres to the outer circumferential surface of the outer conductor 3, the outer circumferential surface of the outside insulative sheath 4 of the central conductor 2, and the outer circumferential surface of the second layer outside insulative sheath 5 of the outer conductor 3 without a gap.

When the concentric core wire 1 is inserted through the heat shrinkable tube 6 shown in Fig. 2 from the distal end surfaces 2e, 3e of the concentric core wire 1 so as to be covered by the base end side 9 of the heat shrinkable tube 6', the heat shrinkable tube 6' is mounted to the concentric core wire 1 shown in Fig. 1A. By inserting the distal end surface 3e of the outer conductor 3 into the hole part 10 of the base end of the branch pipe part 7' from an opening 11 of the base end of the main pipe part 8' of the heat shrinkable tube 6', and inserting the distal end surface 2e of the central conductor 2 into the opening 11 of the base end of the main pipe part 8', the heat shrinkable tube 6' can be easily mounted to the concentric core wire 1.

In addition, besides the heat shrinkable tube 6', the insulative member 6 may be an insulative member 6 integrally formed of synthetic resin or elastomer to have a shape shown in Fig. 1B by using a resin molding metal mold not shown. In that case, the insulative member 6 is formed of the main pipe part 8 and the branch pipe part 7. However, in view of equipment, cost, working hours or the like, it is preferable to use the heat shrinkable tube 6'. In addition, besides the heat shrinkable tube 6', it is also possible to use a shrinkable tube that is shrunk by chemicals or the like.

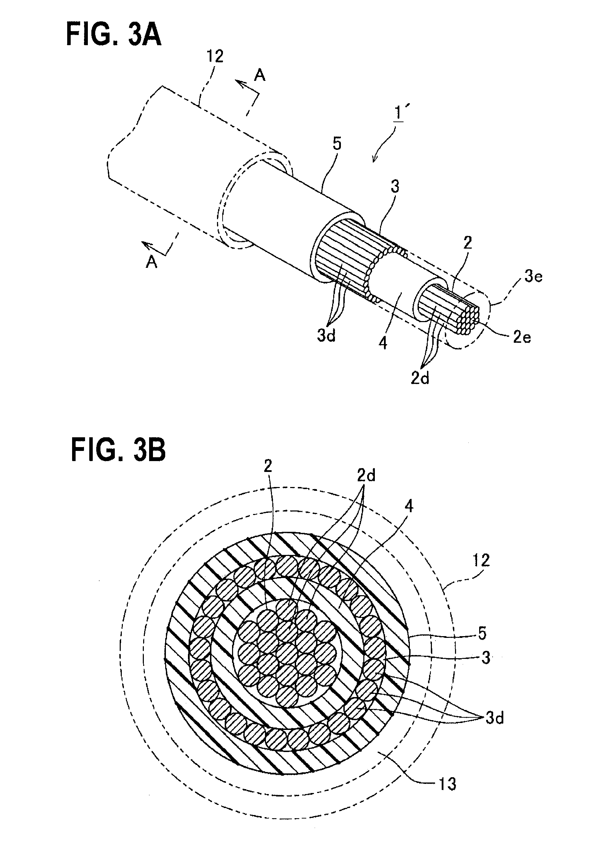

Fig. 3A and Fig. 3B are figures which show an example of a concentric core wire 1' in an initial form before the concentric core wire 1 shown in Fig. 1A is formed.

When the high voltage concentric core wire 1 is wired under a floor of a vehicle, an electric wire protecting tube 12 which is an exterior member and is made of synthetic resin or metal is mounted at the outside of the concentric core wire 1 (in other words, the concentric core wire 1 is inserted into the electric wire protecting tube 12).

The concentric core wire 1' of the initial form includes the central conductor 2 which has a plurality of strands 2d made of aluminum material or copper material, the first layer outside insulative sheath 4 made of synthetic resin which is provided around the outer circumference of the central conductor 2, the second layer outer conductor 3 which has a plurality of strands 3d formed of aluminum material or copper material and which is provided around the outer circumference of the first layer outside insulative sheath 4, and the second layer outside insulative sheath 5 formed of synthetic resin which is provided around the outer circumference of the outer conductor 3.

For the convenience of description, as shown in Fig. 3A, the outer conductor 3 is cut short, but actually as shown with the dashed lines, the outer conductor 3 protrudes to have the same length as the central conductor 2, and a distal end surface 2e of the central conductor 2 and a distal end surface 3e of the outer conductor 3 are positioned on the same surface. The central conductor 2 is formed to have a round cross section, and the outer conductor 3 is formed to have an annular cross section. The strands 3d of the outer conductor 3 of an annular cross section are bundled to form one outer conductor 3 that protrudes to have a branched shape shown in Fig. 1A.

In order to make the central conductor 2 and the outer conductor 3 shown in Fig. 1 have the same wire diameter, it is preferable to make the cross sectional area of the central conductor 2 and the cross sectional area of the outer conductor 3 shown in Fig. 3 equal. A symbol 13 in Fig. 3B shows a gap between the second layer outside insulative sheath 5 and the electric wire protecting tube 12. It is preferable to reduce the gap 13 for space saving.

As described above, in the embodiment, after the central conductor 2 and the outer conductor 3 at the end of the concentric core wire 1 are exposed, the exposed outer conductor 3 is bundled. Then, the insulative member 6 is made cover, integrally and simultaneously, the outer conductor 3, the outside insulative sheath 4 of the central conductor 2 and the outside insulative sheath 5 of the outer conductor 3. Thereby, while the outer conductor 3 is inserted through the branch pipe part 7 of the insulative member 6, the concentric core wire 1 is insulated.

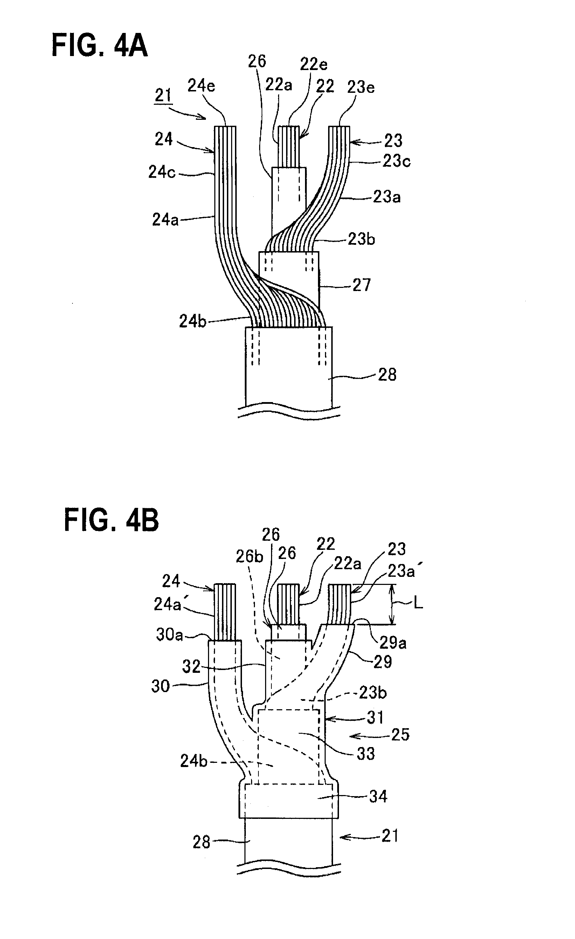

It is illustrated in Figs. 4A to 6B that for an insulating structure and an insulating method of a concentric core wire according to another embodiment of the present invention, when a central conductor 22 and two outer conductors 23, 24 of a concentric core wire 21 are arranged (that is, branched) to have a trifurcated shape, the conductors (the central conductor 22, the outer conductors 23 and 24) are integrally insulated, fixed and positioned by an insulative member 25.

As shown in Fig. 4A, at one side (the right side in the example shown in Figs. 4A and 4B) from a first layer outside insulative sheath 26 of the central conductor 22, a base end (that is, root) side 23b of an exposed distal end part 23a of the first outer conductor 23 is curved, and a distal end side 23c of the exposed distal end 23a protrudes in parallel with the straight central conductor 22. In addition, in a direction (under the exposed distal end 23a in Figs. 4A and 4B) opposite to the protruding direction of the exposed distal end 23a, a base side (that is, root side) 24b of an exposed distal end 24a of the second outer conductor 24 is bent to the other side (left side in the example in Fig. 4) from a second layer outside insulative sheath 27 of the first outer conductor 23, and a distal end side 24c of the exposed distal end 24a protrudes in parallel with the central conductor 22.

The exposed distal end 23a of the first outer conductor 23 is longer than an exposed distal end 22a of the central conductor 22. The exposed distal end 24a of the second outer conductor 24 is longer than the exposed distal end 23a of the first outer conductor 23. Distal end surfaces 22e to 24e of the exposed distal ends 22a to 24a of the conductors (the central conductor 22, the outer conductors 23, 24) protrude to the same height and are positioned on the same surface. A third layer outside insulative sheath 28 is arranged outside the second outer conductor 24. The exposed length of the outside insulative sheath 26 of the central conductor 22 and the exposed length of the second layer outside insulative sheath 27 are approximately equal.

The exposed distal end 23a of the first outer conductor 23, the exposed distal end 24a of the second outer conductor 24, the first layer outside insulative sheath 26 of the central conductor 22, the second layer outside insulative sheath 27 of the first outer conductor 23, and the third layer outside insulative sheath 28 of the second outer conductor 24 in Fig. 4A, are integrally covered by the insulative member 25, as shown in Fig. 4B. Therefore, the exposed distal ends 23a, 24a of the first and second outer conductors 23, 24 in Fig. 4A except short exposed distal ends 23a', 24a' are insulated from the central conductor 22 and the outside. Then, the exposed distal ends 23a', 24a' of the first and second outer conductors 23, 24 are positioned in parallel with the central conductor 22.

The first outer conductor 23 except the exposed distal end 23a' is covered and insulated by a first branch pipe part 29 of the insulative member 25. The exposed distal end 23a' passes through the first branch pipe part 29. The second outer conductor 24 except the exposed distal end 24a' is covered and insulated by a second branch pipe part 30, which is longer than the first branch pipe part 29, of the insulative member 25. The exposed distal end 24a' passes through the second branch pipe part 30.

In addition, an upper half side 26a of the outside insulative sheath 26 of the central conductor 22 is exposed, and a lower half side 26b of the outside insulative sheath 26 is covered by an upper half side 32 of a main pipe part 31 of the insulative member 25. The upper half side 32 of the main pipe part 31 covers and insulates the base side (that is, root side) 23b of the first outer conductor 23. A middle side 33 of the main pipe part 31 covers and insulates the base side (that is, root side) 24b of the second outer conductor 24. A lower part 34 of the main pipe part 31 covers a distal end side part of the third layer outside insulative sheath 28 of the second outer conductor 24.

The exposed distal end 22a of the central conductor 22 and the exposed distal ends 23a', 24a' of the first and second outer conductors 23, 24, which protrude from the distal ends (that is, the upper ends) 29a, 30a of the branch pipe parts 29, 30 of the insulative member 25, are exposed to have the same length L. For example, terminals are electrically connected to the distal end exposed parts 22a, 23a', and 24a' of the conductors (the central conductor 22, the outer conductors 23, 24) respectively by being crimped. It is preferable that the distal end exposed parts 22a, 23a', and 24a' of the conductors (the central conductor 22, the outer conductors 23, 24) are arranged at equal pitches in an electric wire radial direction.

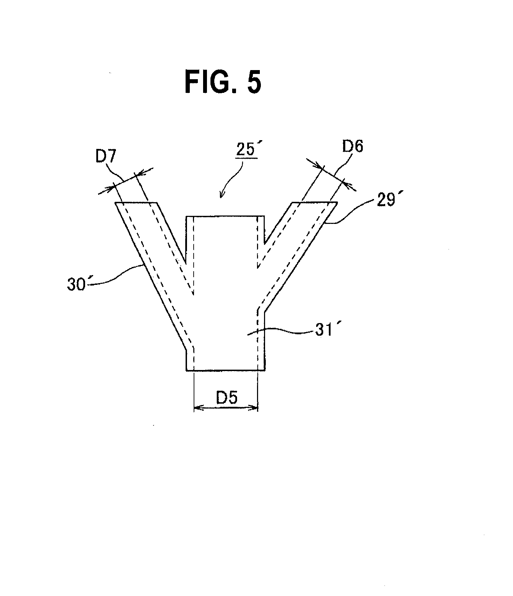

The insulative member 25 shown in Fig. 4B, as an example, is obtained by thermally shrinking a heat shrinkable tube 25' of Fig. 5 at a high temperature by blowing hot air or the like. As shown in Fig. 5, the heat shrinkable tube 25' in an initial form (that is, a state before being heated) is branched to have a trifurcated shape. The heat shrinkable tube 25' has a central main pipe part 31', a first branch pipe part 29' which is protruded (that is, branched) obliquely upward from the upper half side at one side (that is, right side) of the main pipe part 31', and a second branch pipe part 30' which is protruded (that is, branched) obliquely upward from the lower half side at the other side (that is, left side) of the main pipe part 31'. In the example shown in Fig. 5, the branch pipe parts 29', 30' are straightly formed, but the branch pipe parts 29', 30' also may be formed into a curved shape corresponding to the curved shape of the base (that is, root) sides 23b, 24b of the outer conductors 23, 24 shown in Fig. 4A.

An inner diameter D5 of the main pipe part 31' of the heat shrinkable tube 25' shown in Fig. 5 is formed to be larger than the outer diameter of the third layer insulative sheath 28 of the concentric core wire 21 shown in Fig. 4A. An inner diameter D6 of the first branch pipe part 29' is formed to be larger than the outer diameter of the first outer conductor 23 of the concentric core wire 21. An inner diameter D7 of the second branch pipe part 30' is formed to be larger than the outer diameter of the second outer conductor 24 of the concentric core wire 21. Like the heat shrinkable tube 6' in the example shown in Fig. 2, because the heat shrinkable tube 25' shrink in a radial direction and an axial direction, the initial lengths of the main pipe part 31' and the branch pipe parts 29', 30' of the heat shrinkable tube 25' are specified to such a length that the distal ends 22a, 23a' and 24a' of the conductors (the central conductor 22, the outer conductors 23 and 24) of the concentric core wire 21 are exposed in a shrunk state.

The first layer outside insulative sheath 26 of the central conductor 22, the second layer outside insulative sheath 27, and the distal end part of the third layer outside insulative sheath 28 of the concentric core wire 21 shown in Fig. 4A are inserted into the main pipe part 31' of the heat shrinkable tube 25'. Then, the base sides (that is, root sides) 23, 24 of the outer conductors 23, 24 are accommodated into the main pipe part 31'. Thereby, the first outer conductor 23 is inserted inside the first branch pipe part 29' except the base side 23b, and the second outer conductor 24 is inserted inside the second branch pipe part 30' except the base side 24b.

In this state, the heat shrinkable tube 25' is heated by hot wind from a heater or the like, and shrinks as shown in Fig. 4B. Thereby, the heat shrinkable tube 25' insulates the outer conductors 23, 24 except the exposed distal ends 23a' and 24a', and at the same time, positions the outer conductors 23 and 24 to be horizontally parallel to the exposed distal end 22a of the central conductor which is previously exposed.

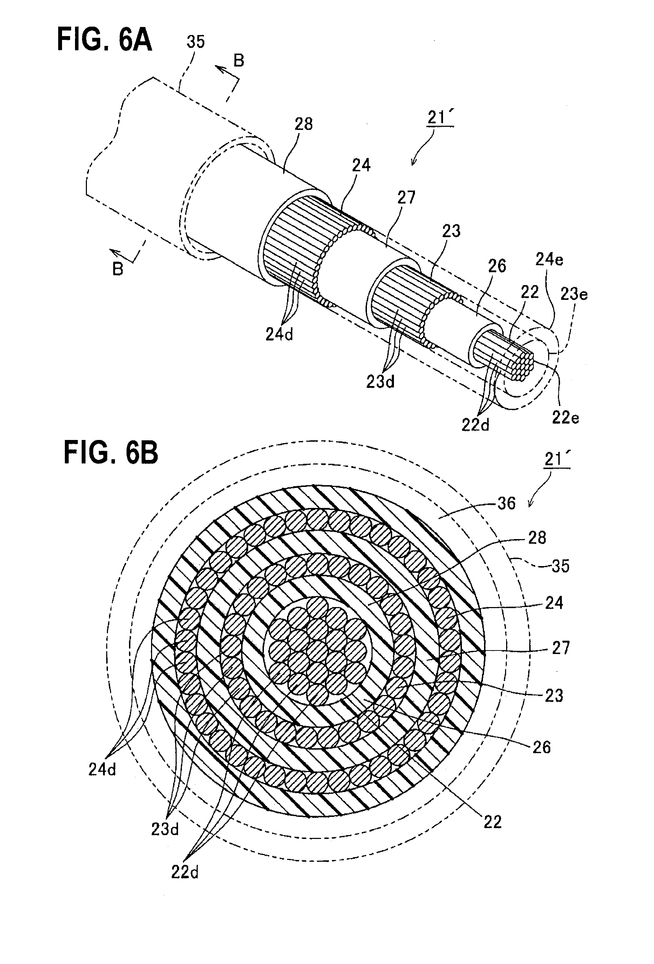

As shown in Figs. 6A and 6B, a concentric core wire 21' in the initial form applied to the example in Fig. 4 includes the central conductor 22 which has a plurality of strands 22d made of aluminum material or copper material, the first layer outside insulative sheath 26 made of synthetic resin outside the central conductor 22, the first outer conductor 23 which has a plurality of strands 23d made of aluminum material or copper material and is arranged to have an annular shape outside the first layer outside insulative sheath 26, the second layer outside insulative sheath 27 which is made of synthetic resin outside the first outer conductor 23, and the second outer conductor 24 which has a plurality of strands 24d made of aluminum material or copper material and is arranged to have an annular shape outside the second layer outside insulative sheath 27.

Except the end part which has the exposed distal ends 22a to 24a of these conductors (the central conductor 22, the outer conductors 23 and 24), the concentric core wire 21 shown in Fig. 4 is inserted into the electric wire protecting tube 35 which is made of synthetic resin or metal. A symbol 36 in Fig. 6B shows a gap between the third layer outside insulative sheath 28 and the electric wire protecting tube 35. It is preferable to reduce the gap 36 for space saving.

For the convenience of description, as shown in Fig. 6A, the first and second outer conductors 23 and 24 are cut short, but actually, the distal end surfaces 23e and 24e of the first and second outer conductors 23 and 24 are extended to have the same protruding position (that is, height) as the distal end surface 22e of the central conductor 22. The strands 23d of the first outer conductor 23 are bundled (that is, converged), and as shown in Fig. 4A, are bent to one side (that is, right side) relative to the central conductor 22 to be eccentric. The protruding distal end side (that is, a part connected to a terminal) 23c of the first outer conductor 23 is arranged in parallel with the central conductor 22. In addition, the strands 24d of the second outer conductor 24 are bundled, and as shown in Fig. 4A, are bent to the other side (that is, left side) relative to the central conductor 22 to be eccentric. The protruding distal end side (that is, a part connected to a terminal) 24c of the second outer conductor 24 is arranged in parallel with the central conductor 22. In this way, the process to obtain the concentric core wire 21 shown in Fig. 4A is completed.

In the example shown in Fig. 4, the insulative member 25 may be formed by molding resin or the like instead of the heat shrinkable tube 25'. Besides the heat shrinkable tube 25', it is also possible to use a shrinkable tube that is shrunk by chemicals or the like. In the example shown in Fig. 4, the second outer conductor 24 is at the left side of the central conductor 22, but it is also possible to arrange the second outer conductor 24 parallelly at the right side of the first outer conductor 23. In the example shown in Fig. 4, the outer conductors 23 and 24 are arranged parallelly at the left and right sides of the central conductor 22, but it is also possible to arrange the outer conductors 23 and 24 so that the central conductor 22 and the outer conductor 23, 24 are positioned at the vertices of a virtual triangle in a top view when viewed from above.

Like the embodiment shown in Fig. 1, the outer conductors 23, 24 include curve parts 23b, 24b at the base side (that is, root side) and the straight distal end sides 23c, 24c. Thus, the outer conductors 23, 24 become shorter than the central conductor 22 by the curved parts. In this case, it is preferable to cut the central conductor 22 a little shorter to match the length of the outer conductors 23, 24. In addition, like the embodiment shown in Fig. 1, when the exposed distal end 22a of the central conductor is long, it is possible to cover the base end side of the exposed distal end 22a of the central conductor 22 and the first layer outside insulative sheath 26, which is adjacent to the base end side of the exposed distal end 22a, with the insulative member 25 (that is, the insulative member 25 covers the base end side of the exposed distal end 22a of the central conductor 22 and the adjacent outside insulative sheath 26).

Like the embodiment shown in Fig. 1, the outer conductors 23, 24 are in parallel with the central conductor 22, but it is also possible that the outer conductors 23, 24 are protruded toward different directions (that is, intersecting directions), and in such a state, the outer conductors 23, 24 are integrally covered and insulated by the insulative member 25. Like the embodiment shown in Fig. 1, the outer conductor 23 (24) is bundled into one bundle, but it is also possible to bundle the outer conductor 23 (24) into two or more bundles, and electrically connect terminals to the bundled branch outer conductors respectively.

The following effects can be achieved by the insulating structures and insulating methods of the concentric core wires 1 and 21 according to the above embodiments.

Because the insulative members 6 and 25 which are formed of the heat shrinkable tubes 6' and 25' in the above embodiments have flexibility, when, for example, an operator manually presses the branch pipe parts 7, 29 and 30 of the insulative members 6 and 25 shown in Fig. 1B and Fig. 4B radially inward toward the central conductors 2 and 22, the branch pipe parts 7, 29 and 30 can be moved (converged) toward the central conductors 2 and 22 integrally with the outer conductors 3, 23 and 24. The ends of the concentric core wires 1 and 21 for high voltage can be easily inserted into (in other words, penetrate) the electric wire protecting tubes 12 and 35 which are made of, for example, synthetic resin or metal. After the insertion, the outer conductors 3, 23 and 24 at the ends of the concentric core wire 1 and 21 which are led out from the ends of the electric wire protecting tubes 12 and 35 restore outward by the elastic force of the branch pipe parts 7, 29 and 30 of the insulative members 6 and 25, and the central conductor 2, 22 and the outer conductors 3, 23 and 24 in Fig. 1B and Fig. 4B maintain to be arranged in parallel with each other.

Because the concentric core wires 1, 21 of the embodiments have a round cross section, the concentric core wires 1, 21 can be inserted through the electric wire protecting tubes 12, 35 which have a round cross section in a space saving way. Therefore, a wire harness, which is wired under the floor of a vehicle with the electric wire protecting tubes 12, 35 in a space saving way, can be formed.

In the concentric core wire 21 having the conductors (the central conductor 22, the outer conductors 23 and 24) shown in Fig. 4 which are divided into a trifurcated shape, the pitches of the central conductor 22, the first and second outer conductors 23 and 24 can be specified to be the same so as to match the pitches of three-phase terminals of an connecting-side apparatus such as an inverter or a motor of a vehicle. In this case, because while the terminals are electrically connected to the conductors, terminals at the conductor side are easily positioned relative to the terminals of the apparatus, connecting operativity is improved.

In addition, by using the heat shrinkable tubes 6' and 25' in the embodiments as the insulative members 6 and 25, in comparison with that the outer conductors 3, 23 and 24 are molded, insulated and fixed to the outside insulative sheaths 4 and 26 of the central conductors 2 and 22, the outer conductors 3, 23 and 24 can be insulated easily at a lower cost by a small device (for example, a heater). Needless to say, the insulating operation is more efficient than an operation of winding insulative tape.

The technical scope of the present invention is not limited to the above described embodiments. The above described embodiments can be accompanied by various kinds of modifications or improvements in the technical scope of the present invention.

The insulating structure and the insulating method of the concentric core wire according to the embodiments will be summarized below.
(1) The concentric core wire insulating structure according to the embodiments includes the concentric core wire 1 (21) and the insulative member 6 (25) which covers the concentric core wire 1 (21). The concentric core wire 1 (21) has the central conductor 2 (22) which is exposed at one end of the concentric core wire, and the bundled outer conductor 3 (23, 24) which is exposed at the end. The insulative member 6 (25) integrally covers the outer conductor 3 (23, 24), the outside insulative sheath 4 (26) of the central conductor 2 (22), and the outside insulative sheath 5 (27, 28) of the outer conductor 3 (23, 24). The outer conductor 3 (23, 24) passes through the branch pipe part 7 (29, 30) of the insulative member 6 (25).
(2) In the concentric core wire insulating structure according to the embodiment, the concentric core wire 21 has the first outer conductor 23, and the second outer conductor 24 which are bundled separately as the outer conductor. The insulative member 25 integrally covers the first outer conductor 23 and the second outer conductor 24. The first outer conductor 23 passes through the first branch pipe part 29 of the insulative member 25, and the second outer conductor 24 passes through the second branch pipe part 30 of the insulative member 25.
(3) In the concentric core wire insulating structure according to the embodiments, the insulative member 6 (25) is a shrinkable tube made of synthetic resin which has a main pipe part 8 (31) into which the central conductor 2 (22) is inserted, and the branch pipe part 7 (29, 30) into which the outer conductor 3 (23, 24) is inserted.
(4) In the concentric core wire insulating method according to the embodiments, after the central conductor 2 (22) and the outer conductor 3 (23, 24) at one end of the concentric core wire 1 (21) are exposed, the exposed outer conductor 3 (23, 24) is bundled, and then the outer conductor 3 (23, 24), the outside insulative sheath 4 (26) of the central conductor 2 (22), and the outside insulative sheath 5, (27, 28) of the outer conductor 3 (23, 24) are integrally covered by the insulative member 6 (25) in such a way that the outer conductor 3, (23, 24) passes through the branch pipe part 7 (29, 30) of the insulative member 6 (25).

This application is based on the Japanese patent application (patent application No. 2012-192882) filed on September 3rd, 2012, whose content is incorporated herein by reference.

### Industrial applicability

The insulating structure and insulating method of a concentric core wire according to the present invention can be used to surely, easily and at a low cost insulate an outer conductor of a concentric core wire for the purpose of connecting a central conductor and the outer conductor of the concentric core wire to, for example, separate terminals or the like, by using the concentric core wire.

### Reference Signs List

- 1, 21: concentric core wire
- 2, 22: central conductor
- 3, 23, 24: outer conductor
- 4, 26: outside insulative sheath
- 5, 27, 28: outside insulative sheath
- 6, 25: insulative member (shrinkable tube)
- 7, 29, 30: branch pipe part
- 8, 31: main pipe part

## Claims

1. A concentric core wire insulating structure comprising:
a concentric core wire; and
an insulative member that covers the concentric core wire,
wherein the concentric core wire has a central conductor which is exposed at one end of the concentric core wire, and a bundled outer conductor which is exposed at the end,
the insulative member integrally covers the outer conductor, an outside insulative sheath of the central conductor, and an outside insulative sheath of the outer conductor, and
the outer conductor passes through a branch pipe part of the insulative member.

2. The concentric core wire insulating structure according to claim 1, wherein the concentric core wire has a first outer conductor and a second outer conductor which are bundled separately as the outer conductor,
the insulative member integrally covers the first outer conductor and the second outer conductor, and
the first outer conductor passes through a first branch pipe part of the insulative member, and the second outer conductor passes through a second branch pipe part of the insulative member.

3. The concentric core wire insulating structure according to claims 1 or 2, wherein the insulative member is a shrinkable tube made of synthetic resin which has a main pipe part into which the central conductor is inserted, and the branch pipe part into which the outer conductor is inserted.

4. A concentric core wire insulating method, wherein after a central conductor and an outer conductor at one end of a concentric core wire are exposed, the exposed outer conductor is bundled, and then the outer conductor, an outside insulative sheath of the central conductor, and an outside insulative sheath of the outer conductor are integrally covered by an insulative member in such a way that the outer conductor passes through a branch pipe part of the insulative member.
